**Europäisches Patentamt**

**European Patent Office**

**Office européen des brevets**

(11) Numéro de publication: **0 036 369**
**B1**

(12) **FASCICULE DE BREVET EUROPEEN**

(45) Date de publication du fascicule du brevet: **19.06.85**

(21) Numéro de dépôt: **81400392.7**

(22) Date de dépôt: **13.03.81**

(51) Int. Cl.⁴: **G 02 B 6/24**

(54) Procédé et dispositif de raccordement sur chantier de câbles à fibres optiques.

(30) Priorité: **14.03.80 FR 8005737**

(43) Date de publication de la demande:
**23.09.81 Bulletin 81/38**

(45) Mention de la délivrance du brevet:
**19.06.85 Bulletin 85/25**

(84) Etats contractants désignés:
**BE CH DE FR GB IT LI NL SE**

(56) Documents cités:
**FR-A-2 420 777**
**US-A-4 110 000**

(73) Titulaire: **LIGNES TELEGRAPHIQUES ET TELEPHONIQUES L.T.T.**
**1, rue Charles Bourseul**
**F-78702 Conflans-Ste-Honorine (FR)**

(72) Inventeur: **Hulin, Jean-Pierre**
**THOMSON-CSF SCPI 173, bld Haussmann**
**F-75360 Paris Cedex 08 (FR)**
Inventeur: **Bouvard, André**
**THOMSON-CSF SCPI 173, bld Haussmann**
**F-75360 Paris Cedex 08 (FR)**
Inventeur: **Le Maitre, Patrick**
**THOMSON-CSF SCPI 173, bld Haussmann**
**F-75360 Paris Cedex 08 (FR)**

(74) Mandataire: **Weinmiller, Jürgen et al**
**Zeppelinstrasse 63**
**D-8000 München 80 (DE)**

EP 0 036 369 B1

Courier Press, Leamington Spa, England.

## Description

La présente invention concerne un procédé et un dispositif de raccordement sur chantier de deux câbles de transmission par fibres optiques comportant chacun, sous un ensemble d'enveloppes de protection, une pluralité d'éléments de câbles.

On connaît différents types de structure de câble à fibres optiques. L'une d'entre elles consiste en un support cylindrique diélectrique armé le long de son axe et creusé de rainures régulièrement disposées sur son pourtour, et dans chacune desquelles est logée une fibre optique. Une telle structure de câble a été décrite notamment dans la demande de brevet français déposée au nom de la Demanderesse le 18 février 1977 et publiée sous le n° 2 381 326, concernant: "Elément de câble incorporant des fibres optiques".

Le problème du raccordement ou épissure de deux câbles multifibres du type cylindrique rainuré a déjà fait l'objet de publications. A titre d'exemple, on citera la demande de brevet français déposée au nom de la Demanderesse le 3 août 1976 et publiée sous le n° 2 360 896, concernant: "Structure de raccordement pour câble à fibres optiques", et la demande de brevet français déposée au nom de la Demanderesse le 24 mars 1978 et publiée sous le n° 2 420 777, concernant: "Procédé et appareillage de raccordement de câbles à fibres optiques" décrivant des solutions particulièrement adaptés à la structure de câble décrite ci-dessus.

Les procédés d'épissurage connus jusqu'à présent sont caractérisés en ce que la précision du centrage des deux câbles repose à la fois sur un élément disposé suivant l'axe des câbles et sur la structure mécanique extérieure de protection de l'épissure. Une telle disposition conduit à assurer le centrage par deux dispositifs successifs relativement indépendants, ci qui risque de provoquer des tensions mécaniques néfastes au niveau du raccord. La précision maximale d'un tel centrage est obtenue suivant l'axe, or les fibres optiques sont disposées suivant un cercle concentrique à cet axe et le rayon de cer cercle est un facteur multiplicatif de l'erreur d'alignement des fibres. D'autre part, les procédés connus produisent un raccord fixe, c'est-à-dire dont le démontage entraîne la destruction d'éléments importants interdisant le remontage.

La présente invention a pour but de remédier à ces inconvénients en proposant un procédé d'épissurage et son dispositif de mise en oeuvre qui permettent de réduire au minimum l'habileté necéssaire à l'opérateur pour effectuer le raccordement, ainsi que le temps nécessaire à une telle opération et cela quel que soit le nombre de fibres portées par le câble.

A cet effet, l'invention a pour objet un procédé de raccordement sur chantier de deux câbles de transmission à fibres optiques, comportant chacun un support diélectrique dans lequel sont logées des fibres optiques, comprenant les étapes opératoires suivantes effectuées sur chaque extrémité de câble:

— on dénude les extrémités des câbles sur une longueur prédéterminée;
— on écarte vers l'extérieur les fibres ainsi dégagées;
— on coupe perpendiculairement à son axe le support débarrassé de ses fibres et on fixe une pièce formant embout prolongateur, creusée de rainures, sur l'extrémité dudit support;
— on rabat les fibres dans les rainures de cet embout et on les y fixe rigidement;
— on coupe perpendiculairement à son axe cet embout ainsi que les fibres qu'il porte;
— on fixe à demeure chacun des assemblages support-embout;
— on aligne les deux câbles en introduisant dans l'embout du premier câble au moins une pige de centrage dans une ouverture longitudinale pratiquée dans chaque embout, la pige sortant de la face de coupe de l'embout et s'engageant dans une ouverture correspondante de l'embout du deuxième câble, caractérisé en ce que, après l'étape de rabat des fibres dans les rainures de l'embout, on fait coulisser autour de l'embout un premier joint torique préalablement engagé sur l'extrémité du câble jusqu'a ce que le joint se loge, de façon à appliquer les filtres au fond desdites mainures, dans une première gorge annulaire usinée dans l'embout au voisinage du flanc arrière d'une pièce de l'embout formant collerette dont le diamètre est supérieur à celui du support, et en ce qu'un second joint torique est introduit par la face avant de l'embout dans une seconde gorge annulaire usinée au voisinage du flanc avant de la collerette.

Selon un aspect de l'invention, la protection mécanique de l'épissure une fois réalisée est assurée par un ensemble de pièces constituant une structure étanche, flottante par rapport au câble, c'est-à-dire une structure mécaniquement isolée de l'épissure par des éléments élastiques empéchant la transmission de contrainte mécanique au câble. Elle ne participe donc pas au centrage des câbles ni à leur alignement.

D'autre caractéristiques et avantages de l'invention apparaîtront mieux dans la description détaillée qui suit et se réfère aux dessins annexés, données uniquement à titre d'exemple, et dans lesquels:

— la figure 1 est une vue en coupe transversale d'un câble à fibres optiques auquel s'applique le procédé selon l'invention;
— la figure 2 est un bloc diagramme des différentes étapes du raccordement;
— la figure 3 est une vue en élévation d'embout en cours de fabrication;
— les figures 4A et 4B représentent deux variantes d'embout fabriqué;
— la figure 5 est une vue en coupe longitudinale d'un raccordement terminé selon un premier mode de réalisation;

— les figures 6 et 7 représentent des outils ou montages utilisés à la mise en oeuvre de l'invention; et

— la figure 8 est une vue similaire à la figure 5 selon un second mode de réalisation.

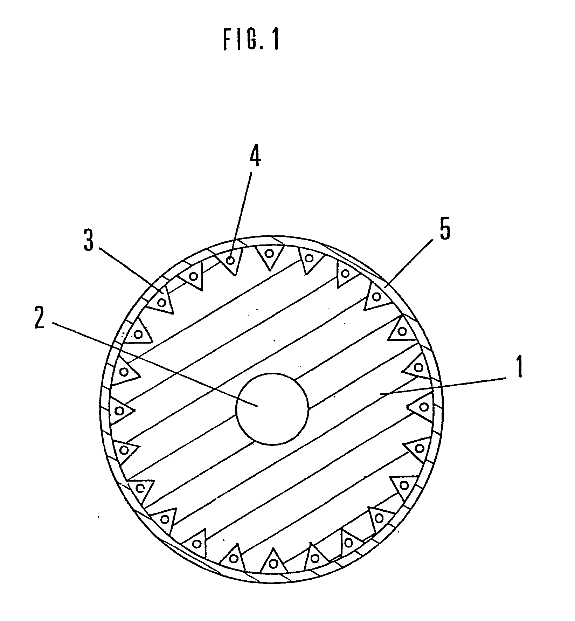

Suivant un exemple de réalisation, on a représenté sur la figure 1 la coupe transversale d'un élément de câble, par exemple, à structure du type cylindrique rainuré, auquel s'applique le procédé de l'invention. Un tel câble comporte un support ou jonc cylindrique diélectrique rainuré 1 extrudé autour d'une âme ou armature 2 destinée à rigidifier le câble et à absorber les contraintes longitudinales. Les rainures, telles 3, sont distribuées uniformément sur la surface externe du support 1. Ces rainures sont soit longitudinales, soit hélicoïdales à pas simple ou alterné. Une fibre optique, telle 4, est logée à l'intérieur de chacune des rainures 3. Les rainures 3 ont un profil par exemple en forme de V. Il est bien entendu que les rainures à lèvres décrites dans la demande de brevet français déposée au nom de la Demanderesse le 18 février 1977 et publiée sous le n° 2 381 326, concernant: "Elément de câble incorporant des fibres optiques" peuvent être également utilisées, sans sortir du cadre de l'invention. Un rubanage 5 complète la structure de l'élément de câble. Celui-ci est protégé contre les agents extérieurs par des enveloppes (non représentées) dont la nature dépend de l'utilisation du câble et sont bien connues de l'homme du métier.

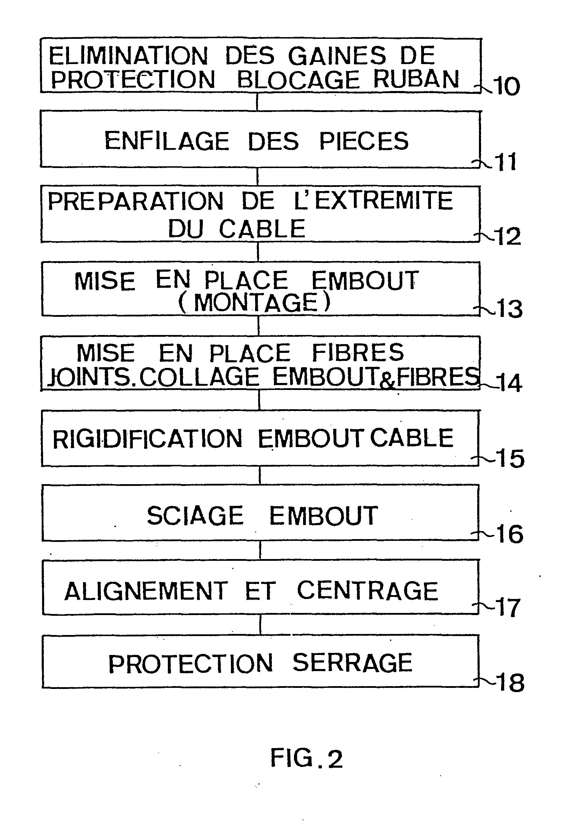

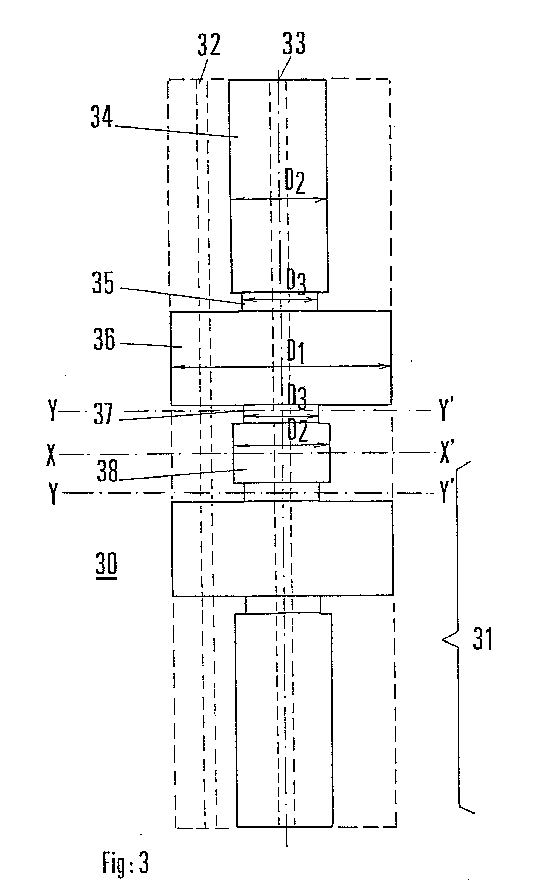

La figure 2 résume d'une façon schématique le procédé de raccordement suivant l'invention. Celui-ci sera décrit ultérieurement plus en détail. Il est bien évident que les opérations sur chantier sont précédées de la préparation en usine des embouts et des différentes pièces nécessaires à la réalisation de l'épaissure et à sa protection mécanique. De préférence, les embouts sont réalisés par moulage fin d'une pièce symétrique (figure 3) qui, par tronçonnage suivant son plan de symétrie, donne deux embouts apairés qui seront de préférence utilisés sur les deux extrémités des câbles à raccorder, ainsi qu'il a déjà été mentionné dans la demande de brevet français déposée au nom de la Demanderesse le 24 mars 1978 et publiée sous le n° 2 420 777, concernant: "Procédé et appareillage de raccordement de câbles à fibres optiques". Toutefois, cette condition n'est pas impérative et la précision du moulage fin permet l'interchangeabilité des embouts.

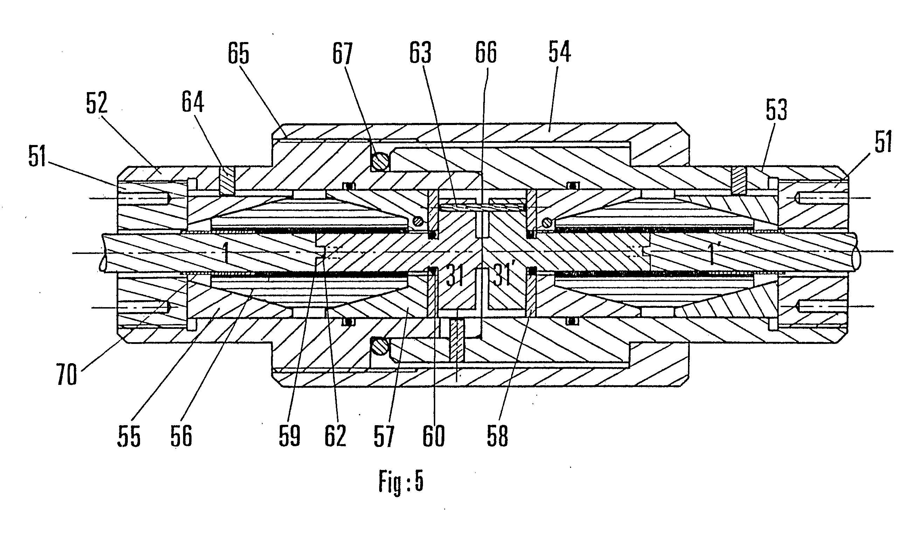

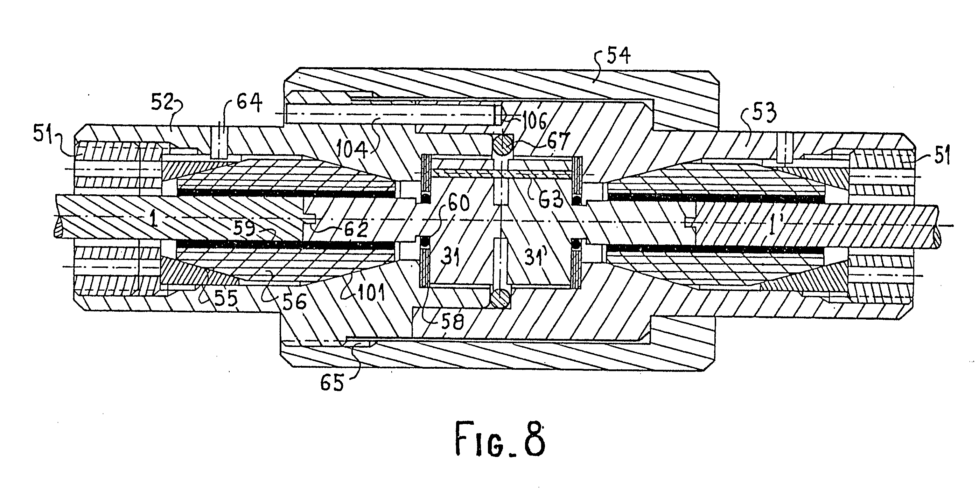

Sur le chantier, chaque câble est maintenu en place dans des pièces en forme d'ètaux montées sur un banc dit d'épissurage, et on commence par dénuder l'extrémité du câble sur une certaine longueur par élimination des enveloppes et gaines protectrices du câble de façon à conserver l'élément tel que représenté sur la figure 1 et l'on fixe le ruban 5 à l'aide d'un manchon élastique (opération 10). On procède à la mise en place des pièces sur l'extrémité à raccorder (opération 11). On commence par enfiler, dans l'ordre où elles seront utilisées sur l'enveloppe, les pièces de protection mécanique reprérées en 51, 52, 53 et 54 sur les figure 5 ou 8, destinées à assurer la protection mécanique du raccordement. On enfile ensuite les pièces mécaniques destinées à assurer la rigidification de la liaison câbleembout, à savoir, comme il apparaît sur les figures 5 ou 8, l'anneau conique 55, le joint élastique biconique 56, le coin de blocage 57 (figure 5), le joint élastique plat 58 ainsi que le manchon cylindrique 59 de diamètre voisin du diamètre de l'élément support 1 du câble et le joint torique 60 de diamètre légèrement inférieur. On procède ensuite à la préparation de l'extrémité du câble (opération 12, figure 2) consistant à éliminer le ruban, à libérer les fibres de leur rainure et à les épanouir vers l'arrière où leur extrémité est fixée dans un montage approprié. Les extrémités des fibres sont traitées de façon à éliminer la gaine de protection qui enrobe la partie active de la fibre. La préparation de l'extrémité du câble nécessite une mise à longueur du support 1, après redressement du pas hélicoîdal si nécessaire. Le support 1 est éliminé sur une longueur de quelques centimètres laissant l'âme 2 dépasser ainsi qu'il apparaît en 62 sur les figures 5 ou 8. Le téton ainsi constitué sert de guidage d'une pièce formant embout prolongateur creusée de rainures, qui est mise en place (opération 13) en l'enfilant sur ledit téton et en alignant visuellement les rainures de l'embout avec celles du support. Les fibres sont alors libérées de l'outil dans lequel elles étaient maintenues à l'arrière de la zone de raccordement et introduites dans les rainures de l'embout où elles sont fixées par collage (opération 14).

L'embout est rendu solidaire du câble par mise en place et chauffage d'un manchon thermorétractable (59 sur les figures 5 ou 8) (opération 15). On procède ensuite au sciage de l'embout muni des fibres (opération 16). On termine l'extrémité de câble en mettant en place les pièces mécaniques de rigidificatin de l'ensemble câble-embout. Les mêmes opérations sont répétées sur l'extrémité du deuxième câble à raccorder. On procède ensuite à l'alignement des deux embouts par l'intermédiaire de piges de centrage (opération 17), puis on réalise le montage des pièces mécaniques de protection de l'épissure et le serrage (opération 18).

L'opération la plus délicate après le positionnement des fibres au fond de leur rainure est celle de l'alignement et du centrage des deux embouts (opération 17) ainsi qu'il sera expliqué plus en détail. Ces opérations sont grandement simplifiées par rapport aux opérations équivalentes des procédés de l'art antérieur grâce à l'utilisation de moyens de centrage et d'alignement disposés concentriquement à la structure suivant un cercle de diamètre supérieur à celui du câble à raccorder, assurant un alignement précis entre fibres.

La figure 3 représente une pièce 30 correspondant à une paire d'embouts 31. On utilise un pièce cylindrique dont le contour est représenté en pointillé sur la figure comportant des rainures profondes dont le fond reproduit le profil des rainures 3 du support 1 du câble et réparties de la même façon, par rapport à l'axe longitudinal de la pièce. La pièce 30 comporte en outre au moins une ouverture ou alésage périphérique tel 32 pratiqué sur toute sa longueur, servant d'élément d'indexation angulaire, et éventuellement un alésage central 33. Une telle pièce cylindrique 30 de diamètre D1 est obtenue par moulage fin d'une résine polymérisable à froid, à faible retrait composée par exemple de métacrylate de méthyle. De préférence, la résine est chargée à l'aide de poudre de quartz en vue de réduire la sensibilité dimensionelle de la pièce en température et sa résistance à l'usure. En outre, la longueur de la pièce 30 est choisie de façon à permettre l'usinage ultérieur de deux embouts simultanément. Après usinage, la pièce 30 est donc constituée de deux moitiés symétriques par rapport au plan médian de tracé XX'. Chaque moitié correspondant à un embout 31 comporte une partie formant queue relativement longue 34 dont le diamètre D2 est égal à celui du support du câble. Cette queue se termine par une première gorge 35 dont le diamètre D3, inférieur à D2, est choisi légèrement supérieur au diamètre du cercle inscrit par les fonds de rainures, la profondeur des rainures au niveau de la gorge 35 étant voisine du rayon des fibres optiques utilisées dans le câble. Lorsque les fibres sont introduites dans les rainures, elles dépassent donc de l'embout au niveau de la gorge 35. Cette caractéristique est utilisée à la fois pour positionner les fibres au cours de l'opération de raccordement et pour les coller définitivement dans les rainures de l'embout. Une collerette 36 au diamètre D1 initial reste la seule partie de l'embout qui conserve les alésages 32, ce qui garantit un positionnement angulaire relatif précis des alésages portés par les deux collerettes. L'embout 31 est terminé par une seconde gorge 37 de même diamètre D3 que la gorge 35 usinée dans une tête 38 de diamètre D2. On a représenté en YY' la trace des plans de tronçonnage des embouts après montage sur l'extrémité du câble. Le raccordement est assuré en appliquant les faces définies par le tronçonnage suivant les plans YY' des deux embouts terminant les deux câbles à raccorder. La précision d'alignement des axes des fibres repose sur l'identité de la répartition angulaire des rainures sur les deux embouts et sur la régularité du profil des fonds de rainures de la pièce moulée. Le centrage des embouts est assuré en utilisant des piges coopérant avec les alésages 32. L'expérience a montré que la précision obtenue par moulage permet d'apairer des embouts moulés isolément, ce qui donne une plus grande souplesse au procédé selon l'invention et permet éventuellement de procéder au montage des embouts sur des extrémités de câble en usine.

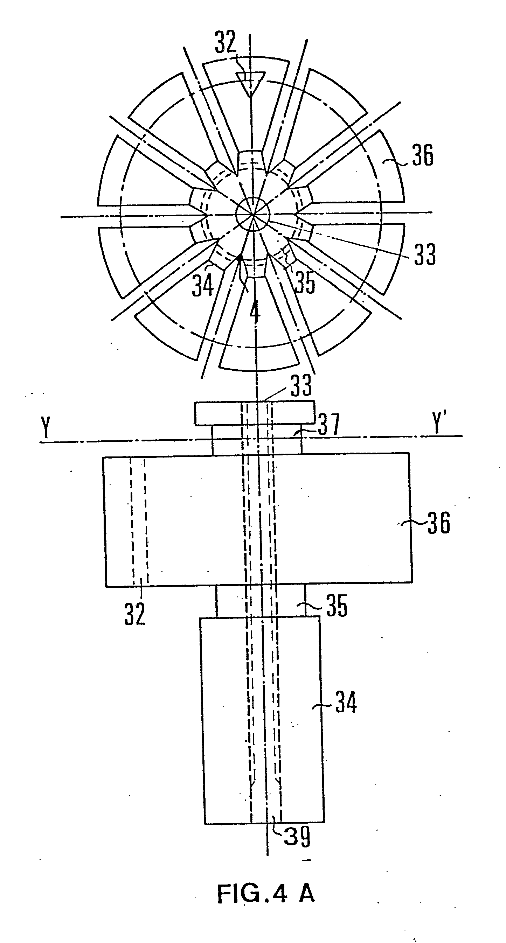

La figure 4A représente une première variant d'un embout unique. Ainsi qu'il apparaît en 39, l'alésage 33 est agrandi au début de la queue 34 de l'embout aux dimensions de l'âme 2 du câble. La figure 4A comporte une vue de face de l'embout comprenant un alésage périphérique 32 unique de section triangulaire et une vue de dessus de l'embout, faisant apparaître le profil des rainures dans la collerette 36. La section triangulaire de l'alésage 32 est préférée à une section circulaire car elle facilite le montage et le démontage de la pige de centrage enfoncée à force dans ledit alésage 32.

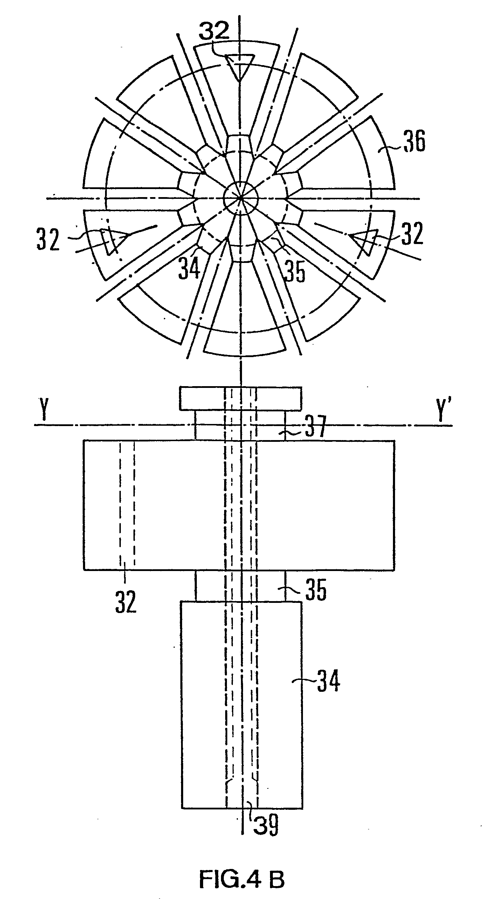

La figure 4B représente les mêmes vues que la figure 4A, selon une seconde variante préférée de l'embout comportant trois alésages périphériques de centrage 32 distribués de façon non uniforme sur un cercle de diamètre environ deux fois supérieur à celui du support du câble à raccorder.

La figure 5 représente une vue en coupe longitudinale d'une épissure complète entre un câble 1 et un câble 1' à l'aide des embouts 31 et 31' mis face à face, selon un premier mode de réalisation de l'invention.

La structure étant symétrique à l'exclusion des pièces assurant l'étanchéité de l'épissure, on décrira les éléments constituant la moitié gauche de la figure.

Ainsi qu'il apparaît sur la figure 5, un prolongement 62 de l'âme 2 du câble au-delà du plan de coupe du support diélectrique 1 constitue un premier doigt de centrage pénétrant dans l'alésage 39 de l'embout 31 et permet un alignement des deux pièces l'une par rapport à l'autre. Le positionnement fin est assuré par visée optique le long des rainures. On a représenté en 70 le manchon de retenue du rubanage à l'extrémité dénudée du câble opposée à l'embout. Ainsi qu'il apparaît, un joint torique 60 occupe la gorge arrière 35 de l'embout, une pige de centrage 63 occupe les deux alésages périphériques homologues 32 des collerettes 36 des deux embouts assurant l'alignement et le centrage des deux embouts. La rigidification de l'ensemble embout 31-câble 1 est assurée par un manchon thermorétractable 59 placé à cheval sur ces deux pièces. Autour du manchon 59 est placé un joint élastique biconique 56 qui prend appui d'une part sur un coin métallique 57, bloqué en rotation, et venant appuyer contre un joint élastique plat annulaire 58 butant contre la face arrière de la collerette 36.

Le joint plat 58 comporte une ouverture centrale rainurée au même écartement angulaire que la partie formant queue de l'embout, et est réalisée en une matière élastomère, telle que par exemple celle connue sous le nom commercial de Silastène. Un anneau conique de centrage 55 bloqué en rotation par la vis 64, complète l'ensemble de rigidification.

La mécanique de protection de l'épissure comporte deux pièces d'étanchéité 52 et 53 solidaires l'une de l'autre, et une bague de serrage 54 dont l'extrémité filetée coopère avec le filetage en 65 de la pièce 52. L'épaulement 66 sert de butée à la pièce d'échanchéite 53, et un joint d'échanchéité 67 est écrasé entre les deux pièces serrées par la bague filetée 54. Deux presse-étoupes 51 solidaires des deux pièces 52 et 53, respectivement, permettent d'appliquer une pression entre les deux faces terminales des embouts 31 et 31' en comprimant les joints annulaires plats élastiques 58. La présence de ces joints annulaires est importante car ils assurent, étant en compression, un rattrapage du jeu éventuel qui pourrait résulter de dilatation différente des pièces et garantit une pression constante dans le plan de contact des deux embouts.

On va maintenant décrire les différentes opérations nécessaires à la réalisation d'un raccordement du type représenté sur la figure 5, en limitant la description aux opérations qui diffèrent de celles de l'art antérieur, constitué en particulier par la demande de brevet français déposée au nom de la Demanderesse le 24 mars 1978 et publiée sous le n° 2 420 777, concernant: "Procédé et appareillage de raccordement de câbles à fibres optiques". L'extrémité du câble placée dans un banc d'épissurage ayant été libérée des enveloppes et gains de protection sur une longueur fixée par le réglage du banc, le ruban 5 (figure 1) entourant l'élément central du câble est fixé à l'aide du manchon élastique 70.

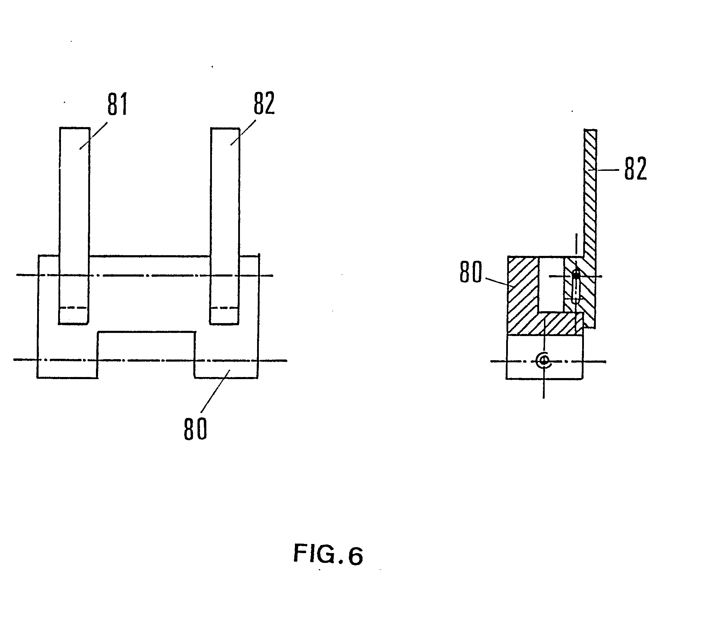

On enfile ensuite sur le câble et dans l'ordre où elles se trouvent sur l'épissure terminée, les différentes pièces constituant la protection mécanique de l'épissure et celles nécessaires à la rigidification de l'ensemble câble-embout. Les deux dernières pièces introduites sont le manchon thermorétractable 59 et le joint torique 60 qui doit être introduit sur le câble à l'aide d'un montage approprié, son diamètre étant inférieur à celui du support du câble. Le ruban 5 est alors coupé sur la partie dénudée du câble et les fibres optiques sont délongées des rainures où elles se trouvaient, par coulissement d'une bague présentant une face interne complémentaire de la face externe du support de câble. La bague étant déplacée à partir de l'extrémité libre du câble, les extrémités de fibres sont recueillies et groupées en deux paquets maintenus de part de d'autre du câble à l'aide de l'outil de retenue représenté sur la figure 6 qui assure un libre accès au support de câble nu.

Plus précisément l'outil de retenue comporte essentiellement un étrier 80 (figure 6) prenant appui sur le banc d'épissurage et portant deux doigts articulés 81 et 82 représentés en position verticale et susceptibles de pivoter en position horizontale perpendiculairement au plan de figure. Les fibres 4 sont placées derrière lesdits doigts et prennent appui sur ceux-ci par leur élasticité propre.

La bague ayant servi à déloger les fibres de leur rainure est ultérieurement enlevée. Simultanément, on opère le dégainage des fibres sur la longueur prescrite.

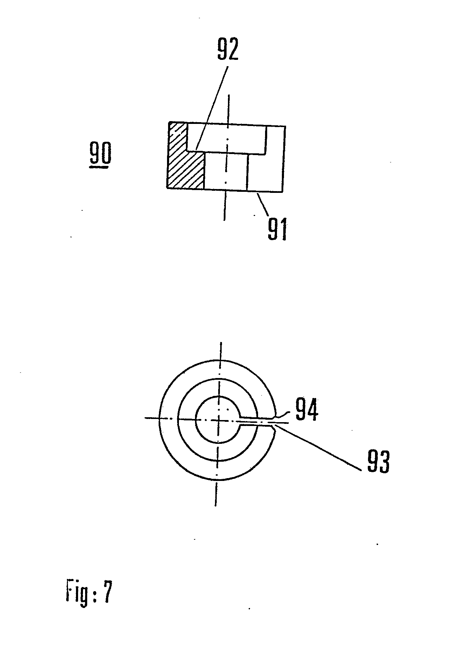

Le support 1 du câble est alors soumis à une détorsion ayant pour objet d'annuler le pas des rainures sur la partie dénudée du câble lorsque celles-ci sont hélicoïdales. On coupe le câble à la longueur correspondant à celle du doigt 62 de l'âme, puis la partie du support est recoupée pour dégager le doigt. On enfile le doigts 62 dans l'alésage 39 de l'embout 31 et on aligne visuellement les rainures. On introduit sur la collerette de l'embout une pièce cylindrique 90 représentée sur la figure 7 constituée d'une bague dont l'alésage 91 présente un épaulement 92 servant de butée. Le diamètre de l'alésage est voisin du diamètre D2 de la queue de l'embout ayant tronçonnage. La bague présente une fente longitudinale 93 permettant le passage d'une soule fibre optique. Plus précisément, la bague 90 est montée en butée sur l'embout 31 avant libération des fibres par pivotement des doigts de retenue 81 et 82 (figure 6). Celles-ci viennent s'épanouir autour de la bague. Par rotation de la bague, les fibres pénètrent une à une dans chaque rainure à travers la fente 93. Ainsi qu'il apparaît, la fentre 93 débouche vers l'extérieur par des congés 94 de façon à éviter toute blessure de la fibre par une arrête vive. Puis, la pièce 90 est retirée.

On fait ensuite coulisser le joint torique 60, de façon à appliquer les fibres en fond de rainure, jusqu'à ce qu'il occupe sa place définitive dans la gorge 35 de l'embout. On colle l'embout 31 et le support de câble 1. Du côté droit de la collerette 36, on introduit à l'aide d'un outil conique, un joint torique, non représenté, dans la gorge 36 de l'embout 31 de façon à appliquer l'extrémité libre des fibres au fond des rainures, on procède au collage des extrémités des fibres dans la gorge 37 et on élimine le joint torique qui occupe cette gorge. On met en place le manchon thermorétractable 59 et on le chauffe. On tronçonne l'embout 31 dans le plan YY' (figures 4A; 4B). Cette opération assure simultanément la mise à longueur des fibres optiques maintenues par collage dans la gorge 37. Elle est effectuée de préférence ainsi qu'il est décrit dans la demande de brevet français déjà citée, déposée au mom de la Demanderesse le 24 mars 1978, à l'aide d'une meule à double granulométrie supprimant le polissage des fibres. On procède ensuite à la mise en place des pièces de rigidification de l'ensemble câble embout, à savoir les pièces 58, 57, 56, 55 et à leur blocage en rotation (vis 64 notamment). On procéde de la même façon sur le deuxième câble.

L'alignement des deux embouts est assuré en introduisant les piges de centrage 63 dans les alésages complémentaires 32 des deux embouts et en appliquant les deux embouts l'un contre l'autre. Un liquide adaptateur d'indice peut être déposé sur les faces avant préalablement à l'enfichage des deux embouts. On procède ensuite au verrouillage de l'ensemble de protection (pièces 52 et 53 bloquées par la bague 54). Les presse-étoupe 51 permettent ensuite de déplacer les pièces de rigidification des ensembles embout-câble afin de comprimer les joints annulaires 58 et d'établir une pression sur la face de contact des deux embouts.

Le démontage d'un tel raccordement est particulièrement simple puisqu'il se limite au dévissage de la bague filetée 54 après desserrage des presse-étoupe 51 et au désenfichage des deux embouts 31 et 31'.

Selon un second mode de réalisation préféré de l'invention, représenté sur la figure 8, et dans laquelle les éléments identiques à ceux de la figure 5 sont désignés par le même repère, la pièce mécanique 52 comporte une partie conique 101 sur laquelle vient prendre appui une partie du joint élastique biconique 56. La pièce mécanique 52 comporte également une tige 104 faisant longitudinalement saillie de ladite pièce 52, et s'engageant dans un logement 106 pratiqué dans la pièce mécanique 53, de sorte que les deux pièces 52 et 53 forment un ensemble unitaire. La présence de la tige 104 permet d'éviter que les deux embouts 31 et 31' ne se désaxent lors du serrage de la bague 54.

Comme il apparaît sur la figure 8, le joint d'étanchéité 67, écrasé entre les deux pièces 52 et 53 serrées par la bague filetée 54, est monté au niveau de la jonction des deux embouts 31 et 31'. Ce joint 67 permet ains de piéger le liquide adaptateur d'indice qui vient se déposer sur les faces avant des deux embouts. Le joint 67 assure donc une parfaite étanchéité, ce qui permet d'augmenter la durée de vie de l'épissure.

Les différentes opérations nécessaires à la réalisation d'un raccordement du type représenté sur la figure 8 sont identiques à celles qui ont été décrites précédemment en référence à la figure 5.

Le procédé de raccordement selon l'invention a été décrit cidessus en se référant à des éléments de câble de type cylindrique rainuré. Bien entendu, ce procédé peut s'appliquer à toute autre structure de câble, sans sortir du cadre de l'invention.

Ainsi, dans le cas d'un raccordement de deux câbles du type plat, chaque embout de type "plat" est réalisé, par exemple par moulage, en deux parties complémentaires superposées dont les faces extérieures respectives sont de forme légèrement arrondie, de façon à permettre l'insertion d'un joint torique. De plus, les rainures longitudinales, dans lesquelles sont logées les fibres optiques, sont creusées uniquement sur le pourtour externe de la partie supérieure de l'embout.

Dans le cas d'un raccordement d'un câble du type cylindrique rainuré avec un câble du type plat, on positionne, enter le câble plat et un embout de type cylindrique rainuré, tel celui représenté en 31 sur la figure 3, un embout intermédiaire de type "plat", tel que décrit cidessus. Cet embout intermédiaire per met ainsi de réaliser la conversion d'une structure plate en une structure cylindrique rainurée.

**Revendications**

1. Procédé de raccordement sur chantier de deux câbles de transmission à fibres optiques, comportant chacun un support diélectrique (1) dans lequel sont logées des fibres optiques (4), comprenant les étapes opératoires suivantes effectuées sur chaque extrémité de câble:

— on dénude les extrémités de câbles sur une longueur prédéterminée;

—on écarte vers l'extérieur les fibres (4) ainsi dégagées;

— on coupe perpendiculairement à son axe le support (1) débarrassé de ses fibres (4) et on fixe une pièce formant embout prolongateur (31), creusée de rainures, sur l'extrémité dudit support;

— on rabat les fibres (4) dans les rainures de cet embout (31) et on les y fixe rigidement;

— on coupe perpendiculairement à son axe cet embout (31) ainsi qui les fibres (4) qu'il porte;

— on fixe à demeure chacun des assemblages support-embout;

— on aligne les deux câbles en introduisant dans l'embout (31) du premier câble au moins une pige de centrage (63) dans une ouverture longitudinale (32) pratiquée dans chaque embout (31), la pige (63) sortant de la face de coupe de l'embout (31) et s'engageant dans une ouverture correspondante de l'embout du deuxième câble, caractérisé en ce que, après l'étape de rabat des fibres (4) dans les rainures de l'embout (31), on fait coulisser autour de l'embout un premier joint torique (60) préalablement engagé sur l'extrémité du câble jusqu'à ce que le joint (60) se loge, de façon à appliquer les fibres (4) au fond desdites rainures dans une première gorge annulaire (35) usinée dans l'embout au voisinage du flanc arrière d'une pièce de l'embout formant collerette (36) dont le diamètre est supérieur à celui de support (1), et en ce qu'un second joint torique est introduit par la face avant de l'embout dans une seconde gorge annulaire (37) usinée au voisinage du flanc avant de la collerette (36).

2. Procédé selon la revendication 1, caractérisé en ce que, après l'opération d'alignement des deux câbles, le procédé comporte une opération de serrage des faces respectives des deux embouts l'une contre l'autre.

3. Procédé selon la revendication 2, caractérisé en ce que l'opération de serrage consiste à comprimer des joints élastiques (58) contre le flanc de la collerette (36) de chaque embout (31).

4. Procédé selon l'une des revendications précédentes, caractérisé en ce qu'au cours de l'étape de rabat des fibres (4) dans les rainures de l'embout (31) et de leur fixation rigide, on dispose coaxialement à l'embout (31) une pièce creuse (90) présentant une fente longitudinale (93) de dimension voisine du diamètre d'une fibre et l'on fait tourner cette pièce de façon que ladite fente se place successivement en regard de chacune desdites rainures, de façon à permettre l'introduction des fibres libérées de leur support (1) successivement dans chacune des rainures de l'embout (31).

5. Procédé selon l'une des revendications précédentes, caractérisé en ce qu'après l'opération de mise en place du premier et du second joints toriques dans la première et la seconde gorges, on colle les fibres (4) dans les rainures de l'embout (31), le collage des fibres étant effectué au voisinage du second joint torique qui est ensuite éliminé.

6. Dispositif de raccordement sur chantier de deux câbles de transmission à fibres optiques pour la mise en oeuvre du procédé selon l'une quelconque des revendications précédentes, chaque câble comportant un support diélectrique (1) dans lequel sont logées des fibres optiques (4), le dispositif comportant:

— des pièces formant embouts prolongateurs (31) rainurées sur toute leur longueur, et destinées à être montées sur chaque extrémité de câble;
— des moyens (60) de fixation rigide des fibres (4) dans les rainures des embouts (31);
— des moyens (55 à 59) de rigidification des assemblages support-embout; et
— des moyens d'alignement des deux embouts (31) comportant au moins une pige de centrage (63) engagée dans une ouverture longitudinale (32) de chaque embout (31), la pige en sortie de l'embout du premier câble s'engageant dans une ouverture correspondante de l'embout du deuxième câble; caractérisé en ce que chaque embout rainuré (31) comporte une partie formant queue (34) de diamètre égale à celui du support (1) de câble, une première gorge annulaire (35) pratiquée à une extrémité de la queue (34), un pièce formant collerette (36) de diamètre supérieur à celui du support (1) et disposée dans le plongement de la première gorge (35), et une seconde gorge annulaire (37) pratiquée à l'extrémité de la collerette (36), les première (35) et seconde (37) gorges étant disposées de part et d'autre de la collerette (36), respectivement.

7. Dispositif selon la revendication 6, caractérise en ce que chaque support (1) est pourvu de rainures longitudinales (3) réparties sur son pourtour dans chacune desquelles est logée une fibre optique (4), et en ce que l'ouverture longitudinale (32) est pratiquée dans la collerette (36) de chaque embout (31), la distance de l'ouverture (32) à l'axe de l'embout (31) étant supérieure au rayon du support (1).

8. Dispositif selon l'une des revendications 6 ou 7, caractérisé en ce que la collerette (36) de chaque embout (31) comporte trois ouvertures (32) réparties d'une façon non uniforme sur la circonférence de diamètre sensiblement égal au double de celui du support (1) de câble.

9. Dispositif selon l'une des revendications 6 à 8, caractérisé en ce que chaque ouverture longitudinale (32) est de forme sensiblement triangulaire.

10. Dispositif selon la revendication 7, caractérisé en ce que les rainures de chaque embout (31) sont réalisées au même écartement angulaire que celles (3) de chaque support (1).

11. Dispositif selon l'une des revendications 6 à 10, caractérisé en ce que les embouts sont réalisées par moulage d'une pièce symétrique (30) qui, par tronçonnage suivant son plan de symétrie, donne deux embouts apairés (31).

12. Dispositif selon l'une des revendications 6 à 11, caractérisé en ce qu'il comporte également des moyens (80 à 82) de retenue provisoire des fibres (4) une fois dégagées du câble.

13. Dispositif selon la revendication 12, caractérisé en ce que les moyens de retenue provisoire comportent une pièce en forme d'étrier (80) sur laquelle sont montées deux doigts articulés (81, 82), les fibres (4) prenant appui sur les doigts.

14. Dispositif selon l'une des revendications 6 à 13, caractérisé en ce que les moyens de rigidification de chaque assemblage support-embout comportent un manchon thermorétractable (59) s'étendant sur le support et l'embout, un joint élastique biconique (56) monté autour du manchon, et un anneau conique (55) bloqué en rotation et sur lequel est appuyé le joint.

15. Dispositif selon l'une des revendications 6 à 14, caractérisé en ce qu'il comporte également deux pièces mécaniques de protection (52, 53) solidaires l'une de l'autre, et une bague filetée (54) montée en butée sur l'une des pièces de protection et assurant le blocage des deux pièces entre elles.

16. Dispositif selon la revendication 15, caractérisé en ce que l'une des pièces de protection (52) comporte une tige (104) faisant longitudinalement saillie de ladite pièce (52), et s'engageant dans un logement (106) pratiqué dans l'autre pièce (53), de sorte que les deux pièces de protection (52, 53) forment un ensemble unitaire.

17. Dispositif selon l'une des revendications 15 ou 16, caractérisé en ce qu'il comporte en outre deux presse-étoupes (51) solidaires des deux pièces de protection (52, 53), respectivement, appliquant une pression entre les deux embouts (31) mis face à face.

**Patentansprüche**

1. Verfahren zum Verbinden zweier Glasfaser-Übertragungskabel auf der Baustelle, wobei jedes Kabel einen dielektrischen Träger (1) aufweist, der die Glasfasern (4) aufnimmt, und das Verfahren die folgenden Arbeitsschritte aufweist, die an jedem Kabelende durchgeführt werden:

— man entfernt die Hüllen über eine vorgegebene Länge von den Enden der Kabel;
— man spreizt die so freigelegten Fasern (4) nach außen;
— man schneidet des von seinen Fasern (4) befreiten Träger (1) senkrecht zu seiner Achse durch und man befestigt ein Verlängerungsstück (31), in das Rillen eingeschnitten sind, auf auf dem Ende des Trägers;

— man legt die Fasern (4) in die Rillen dieses Verlängerungsstücks (31) und befestigt sie dort starr;

— man schneidet dieses Verlängerungsstück (31) sowie die daran befestigten Fasern (4) senkrecht zu dessen Achse durch;

— man befestigt gut jede der aus einem Träger und einem Verlängerungsstück bestehenden Einheiten;

— man richtet die beiden Kabel fluchtend aus, indem man in das Verlängerungsstück (31) des ersten Kabels mindestens einen Zentrierstift (63) in eine in jedem Verlängerungsstück (31) vergesehene Längsöffnung (32) einbringt, wobei der Stift (63) über die Schnittfläche des Verlängerungsstücks (31) vorsteht und in eine entsprechende Öffnung des Verlängerungsstücks des zweiten Kabels eingreift,

dadurch gekennzeichnet, daß nach dem Einlegen der Fasern (4) in die Rillen des Verlängerungsstücks (31) ein erster Dichtungsring (60), der vorab auf das Ende des Kabels aufgezogen wurde, um das Verlängerungsstück herum gleitend soweit verschoben wird, daß der Dichtungsring (60) sich in eine erste Ringnut (35) einlegt, die im Verlängerungsstück in der Nähe der rückwärtigen Flanke eines einen Kragen (36) bildenden Teils des Verlängerungsstücks liegt, dessen Durchmesser größer als der des Trägers (1) ist, so daß die Fasern (4) gegen den Grund der Rillen anliegen, und daß eine zweite Ringdichtung über die Vorderseite des Verlängerungsstücks in eine zweite Ringnut (37) eingebracht wird, die in der Nähe der Vorderflanke des Kragens (36) vorgesehen ist.

2. Verfahren nach Anspruch 1, dadurch gekennzeichnet, daß nach dem Ausrichten der beiden Kabel ein Arbeitsschritt folgt, der aus einem gegenseitigen Andrücken der Stirnflächen der beiden Verlängerungsstücke besteht.

3. Verfahren nach Anspruch 2, dadurch gekennzeichnet, daß das Andrücken so geschieht, daß elastische Dichtungen (58) gegen die Flanke des Kragens (36) jedes Verlängerungsstücks (31) komprimiert werden.

4. Verfahren nach einem der vorhergehenden Ansprüche, dadurch gekennzeichnet, daß während des Einlegens der Fasern (4) in die Rillen des Verlängerungsstücks (31) und während deren starrer Befestigung koaxial zum Verlängerungsstück (31) ein Hohlteil (90) angeordnet wird, das einen Längsspalt (93) besitzt, dessen Abmessung in der Nähe des Durchmessers einer Faser liegt, und daß dieses Teil so gedreht wird, daß der Spalt nacheinander gegenüber jeder Rille gelangt, so daß es möglich ist, Fasern, die von ihrem Träger (1) befreit sind, nacheinander in jede der Rillen des Verlängerungsstücks (31) hineinzustecken.

5. Verfahren nach einem der vorhergehenden Ansprüche, dadurch gekennzeichnet, daß nach dem Einsetzen des ersten und des zweiten Dichtungsrings in die erste und die zweite Nut die Fasern (4) in die Rillen des Verlängerungsstücks (31) hineingeklebt werden, wobei das Kleben der Fasern in der Nähe des zweiten Dichtungsrings erfolgt, der dann entfernt wird.

6. Vorrichtung zum Verbinden zweier Glasfaser-Übertragungskabel auf der Baustelle zur Durchführung des Verfahrens nach einem beliebigen der vorhergehenden Ansprüche, wobei jedes Kabel einen dielektrischen Träger (1) aufweist, der die Glasfasern (4) aufnimmt, und die Vorrichtung aufweist:

— Verlängerungsstücke (31), die über ihre ganze Länge mit Rillen versehen sind und dazu bestimmt sind, an jedem Ende des Kabels angebracht zu werden;

— Mittel (60) zur starren Befestigung der Fasern (4) in den Rillen der Verlängerungsstücke (31);

— Mittel (55 bis 59) für die Versteifung der aus Träger und Verlängerungsstück bestehenden Baueinheit; und

— Mittel zur fluchtenden Ausrichtung der beiden Verlängerungsstücke (31), die mindestens einen Zentrierstift (63) aufweisen, der in eine Längsöffnung (32) jedes Verlängerungsstücks (31) eingreift, wobei der auf dem Verlängerungsstück des ersten Kabels vorstehende Stift in eine entsprechende Öffnung im Verlängerungsstück des anderen Kabels eingreift,

dadurch gekennzeichnet, daß jedes mit Rillen versehene Verlängerungsstück (31) ein Schwanzteil (34) desselben Durchmessers wie der Träger (1) des Kabels, eine erste Ringnut (35), die sich an einem Ende des Schwanzes (34) befindet, einen Kragen (36), dessen Durchmesser größer als der des Trägers (1) ist und der in der Verlängerung der ersten Ringnut (35) liegt, und eine zweite Ringnut (37) aufweist, die sich am Ende des Kragens (36) befindet, wobei die beiden Nuten (35, 37) zu beiden Seiten des Kragens (36) liegen.

7. Vorrichtung nach Anspruch 6, dadurch gekennzeichnet, daß jeder Träger (1) Längsrillen (3) aufweist, die über den Umfang verteilt sind und je eine Glasfaser (4) enthalten, und daß die Längsöffnung (32) im Kragen (36) jedes Verlängerungsstücks (31) angebracht ist, wobei der Abstand der Öffnung (32) von der Achse des Verlängerungsstücks (31) größer als der Radius des Trägers (1) ist.

8. Vorrichtung nach einem Ansprüche 6 oder 7, dadurch gekennzeichnet, daß der Kragen (36) jedes Verlängerungsstücks (31) drei Öffnungen (32) aufweist, die in ungleichmäßiger Form über den Umfang verteilt sind und deren Durchmesser im wesentlichen doppelts so groß wie der des Trägers (1) des Kabels ist.

9. Vorrichtung nach einem der Ansprüche 6 bis 8, dadurch gekennzeichnet, daß jede Länsöffnung (32) im wesentlichen Dreieckform besitzt.

10. Vorrichtung nach Anspruch 7, dadurch gekennzeichnet, daß die Rillen jedes Verlängerungsstücks (31) denselben winkelmäßigen Abstand wie die Rillen (3) jedes Trägers (1) besitzen.

11. Vorrichtung nach einem der Ansprüche 6 bis 10, dadurch gekennzeichnet, daß die Verlängerungsstücke durch Gießen eines symmetrischen Bauteils (30) gebildet werden, das nach Durchschneiden entlang seiner Symmetrieebene ein Paar von Verlängerungsstücken (31) ergibt.

12. Vorrichtung nach einem der Ansprüche 8 bis 11, dadurch gekennzeichnet, daß sie außerdem Mittel (80 bis 82) enthält, mit denen die Fasern (4) vorübergehend festgehalten werden, nachdem sie vom Kabel freigelegt wurden.

13. Vorrichtung nach Anspruch 12, dadurch gekennzeichnet, daß die Mittel zum vorübergehenden Befestigen ein bügelförmiges Bauteil (80) enthalten, auf dem zwei Finger (81, 82) gelenkig montiert sind, wobei die Fasern (4) sich auf den Fingern abstützen.

14. Vorrichtung nach einem der Ansprüche 6 bis 13, dadurch gekennzeichnet, daß die Mittel zur Versteifung jeder aus einem Träger und einem Verlängerungsstück bestehenden Baueinheit eine wärmeschrumpfende Hülle (59) enthalten, die sich über den Träger und das Verlängerungsstück erstreckt, wobei eine bikonische elastische Dichtung (56) um die Hülle herum angebracht ist, und daß diese Mittel weiter einen konischen Ring (55) aufweisen, der in Drehrichtung blockiert ist und auf dem die Dichtung sich abstützt.

15. Vorrichtung nach einem der Ansprüche 6 bis 14, dadurch gekennzeichnet, daß sie außerdem zwei mechanische Schutzstücke (52, 53), die miteinander verbunden sind, und einen mit Gewinde versehenen Ring (54) aufweist, der in Anschlag gegen eines der Schutzstücke montiert ist und die gegenseitige Blockierung der beiden Schutzstücke sicherstellt.

16. Vorrichtung nach Anspruch 15, dadurch gekennzeichnet, daß eines der Schutzstücke (52) einen Stift (104) aufweist, der in Längsrichtung über dieses Stück (52) vorsteht und in ein Loch (106) im anderen Stück (53) eingreift, derart, daß die beiden Schutzstücke (52, 53) ein einheitliches Ganzes bilden.

17. Vorrichtung nach einem der Ansprüche 15 oder 16, dadurch gekennzeichnet, daß sie außerdem zwei Stopfbuchsen (51) aufweist, die mit je einem der beiden Schutzstücke (52, 53) verbunden sind und einen Druck auf die einander gegenüberliegenden beiden Verlängerungsstücke (31) ausüben.

**Claims**

1. A method for coupling two glass fibre transmission cables at the working site, each cable comprising a dielectric support (1) in which glass fibres (4) are housed, this method including the following operational steps which are performed on each cable end:

— the ends of the cables are stripped over a predetermined length;
— the fibres (4) thus stripped are bent outwardly;

— the support (1) without its fibres (4) is cut perpendicularly to its axis and an elongating tip (31) bearing grooves is attached to the end of said support;
— the fibres (4) are urged into the grooves of said tip (31) where they are rigidly fixed;
— the tip (31), together with the fibres (4) fixed thererto, is cut perpendicularly to its axis;
— each assembly composed of a support and a tip is permanently fixed;
— the two cables are aligned by introducing at least one centering pin (63) into the tip (31) of the first cable in a longitudinal opening (32) cut into each tip (31), the pin (63) protruding from the cut surface of the tip (31) and engaging in a corresponding opening of the tip of the second cable,

characterised in that after the step of urging the fibres (4) into the grooves of the tip (31), a first torus seal (60), which has previously been engaged on the end of the cable is slipped around the tip to such an extent, that the seal (60) seats itself in a first annular slot (35) which is cut into the tip close to the rear edge of a part of the tip constituting a collar (36), the diameter of which exceeds that of the support (1), such that the fibres (4) are urged against the bottom of said grooves, and characterized in that a second torus seal is introduced through the front face of the tip into a second annular slot (37) situated close to the front edge of the collar (36).

2. A method according to claim 1, characterized in that after the step comprising the alignment of the two cables, the method includes a step in which the respective faces of the two tips are urged one against the other.

3. A method according to claim 2, characterized in that the urging step consists in the compression of elastic seals (58) against the edge of the collar (36) in each tip (31).

4. A method according to one of the preceding claims, characterized in that during the step of urging the fibres into the grooves of the tip (31) and of their rigid solidarization, a hollow element (90) presenting a longitudinal slit (93) of similar dimension as the diameter of one fibre is coaxially disposed with respect to the tip (31) and is rotated such that said slit is situated successively in front of each one of said grooves so as to permit the introduction of the fibres without their support (1) successively into each one of the grooves of the tip (31).

5. A method according to one of the preceding claims, characterized in that after the step of introducing the first and second torus seals into the first and the second slots, the fibres (4) are glued into the grooves of the tip (31), gluing of the fibres taking place in the vicinity of the second torus seal which afterwards is eliminated.

6. A device for coupling two glass fibre transmission cables at the working site for realizing the method according to any one of the preceding claims, each cable comprising a dielectric support (1) in which glass fibres (4) are housed, the device comprising:

— elongating tips (31) provided with grooves on their entire length and susceptible to be mounted on each cable end;
— means (60) for fixing rigidly the fibres (4) in the grooves of the tips (31);
— means (55 to 59) for rigidifying the support-tip assemblies; and
— means for aligning the two tips (31) comprising at least one centering pin (63) which is engaged in a longitudinal opening (32) of each tip (31), the pin which protrudes from the tip of the first cable engaging in a corresponding opening of the tip of the second cable,

characterized in that each tip (31) provided with grooves comprises a zone constituting a tail (34), the diameter of which is equal to that of the support (1) of the cable, a first annular slot (35) provided at one end of the tail (34), a part constituting a collar (36), the diameter of which exceeds that of the support (1) and which is disposed ahead of the first slot (35), and a second annular slot (37) disposed at the end of the collar (36), the first (35) and second slots (37) being respectively disposed on either side of the collar (36).

7. A device according to claim 6, characterized in that each support (1) is provided with longitudinal grooves (3) which are spaced out on its periphery and each of which houses a glass fibre (4), and that the longitudinal opening (32) is cut into the collar (36) of each tip (31), the distance between the opening (32) and the axis of the tip (31) exceeding the radius of the support (1).

8. A device according to one of the claims 6 or 7, characterized in that the collar (36) of each tip (31) comprises three openings (32) which are spaced out in a non-uniform manner on the circonference having a diameter which is substantially equal to the double of the diameter of the cable (1) support.

9. A device according to one of the claims 6 to 8, characterized in that each longitudinal opening (32) has substantially a triangular shape.

10. A device according to claim 7, characterized in that the grooves of each tip (31) are realized according to the same angular spacing as that (3) of each support (1).

11. A device according to one of the claims 6 to 10, characterized in that the tips are realized by moulding a symmetric element (30) which becomes a pair of tips (31) by cutting it along its symmetry plane.

12. A device according to one of the claims 6 to 11, characterized in that it further comprises means (80 to 82) for temporarily retaining the fibres (4) as soon as they are disengaged from the cable.

13. A device according to claim 12, characterized in that the means for temporarily retaining the fibres comprise a stirrup shaped piece (80) on which two articulated fingers (81, 82) are mounted, the fibres (4) leaning against the fingers.

14. A device according to one of the claims 6 to 13, characterized in that the means for rigidifying each support-tip assembly comprise a thermoretractable sleeve (59) extending over the support and the tip, a biconus-shaped elastic seal (56) which is mounted around the sleeve, and a conus-shaped ring (55) which is locked in rotation and on which the seal is applied.

15. A device according to one of claims 6 to 14, characterized in that it further comprises two mechanical protection elements (52, 53) which are fixed to each other, and a threaded ring (54) which abuts against one of the protection elements and ensures the mutual locking of the two elements.

16. A device according to claim 15, characterized in that one of the protection elements (52) comprises a stem (104) which protrudes longitudinally from said element (52) and engages in a housing (106) in the other element (53) in such a way, that the two protection elements (52, 53) constitute a unique assembly.

17. A device according to one of claims 15 or 16, characterized in that it further comprises two packing-boxes (51) which are respectively connected to one of the two proection elements (52, 53) and apply a pressure between the two tips (31) brought into face-to-face relationship.

FIG. 1

ELIMINATION DES GAINES DE PROTECTION BLOCAGE RUBAN —10

ENFILAGE DES PIECES —11

PREPARATION DE L'EXTREMITE DU CABLE —12

MISE EN PLACE EMBOUT (MONTAGE) —13

MISE EN PLACE FIBRES JOINTS. COLLAGE EMBOUT&FIBRES —14

RIGIDIFICATION EMBOUT CABLE —15

SCIAGE EMBOUT —16

ALIGNEMENT ET CENTRAGE —17

PROTECTION SERRAGE —18

FIG.2

Fig : 3

FIG.4 A

FIG.4 B

Fig:5

FIG.6

Fig: 7

Fig. 8